# EUROPÄISCHE PATENTSCHRIFT

(11) **EP 1 913 426 B1**
(45) Veröffentlichungstag und Bekanntmachung des Hinweises auf die Patenterteilung: **04.09.2019**
(21) Anmeldenummer: 06776472.0
(22) Anmeldetag: 27.07.2006
(51) Int. Cl.: G01V 3/08

(54) **ERFASSUNGSEINRICHTUNG, INSBESONDERE ZUR REALISIERUNG EINES SCHUTZSYSTEMS**
DETECTION DEVICE, PARTICULARLY FOR REALIZING A PROTECTION SYSTEM
DISPOSITIF DE DÉTECTION, EN PARTICULIER POUR CRÉER UN SYSTÈME DE PROTECTION

(30) Priorität: 27.07.2005 DE 102005036271
(43) Veröffentlichungstag der Anmeldung: 23.04.2008
(73) Patentinhaber: Microchip Technology Germany GmbH, 82205 Gilching (DE)
(72) Erfinder: RICHTER, Wolfgang, 82319 Starnberg (DE)
(74) Vertreter: sgb europe
(86) Internationale Anmeldenummer: PCT/EP2006/007459
(87) Internationale Veröffentlichungsnummer: WO 2007/012491

(56) Entgegenhaltungen:
- EP-A2- 0 843 425
- WO-A-2004/025062
- DE-A1- 19 836 056
- US-A- 4 753 323
- US-A1- 2002 179 822

## Beschreibung

Die Erfindung richtet sich auf eine Erfassungseinrichtung, insbesondere zur Realisierung eines Schutzsystems über welches beispielsweise motorgetriebene verletzungsrelevante Systeme gesteuert betrieben werden können.

### Hintergrund der Erfindung

Bei der Realisierung von Systemen, die zur Betriebserleichterung mit Antriebseinrichtungen ausgestattet sind, besteht das Problem, dass die zur Abwicklung des Bewegungsablaufes erforderlichen Stellkräfte, oder auch Systemträgheitskräfte auf einem verletzungsrelevanten Niveau liegen. Insbesondere im Zusammenhang mit dem Einsatz von Hilfsantrieben bei Tür-, Fenster- und Verdecksystemen können Einklemmsituationen auftreten. Die bislang eingesetzten Sicherheitseinrichtungen erscheinen als unzulänglich.

Die europäische Patentanmeldung EP 0 843 425 beschreibt ein elektronisches Kommunikationsgerät welches den menschlichen Körper als Übertragungsmedium nutzt. Aus der deutschen Offenlegungsschrift DE 198 36 056 ist eine Anordnung zur Detektion von Hindernissen bekannt. Bei dieser Anordnung zur Detektion von Hindernissen ist eine kapazitive Sensoreinrichtung, bestehend aus einer elektrisch leitenden Senderflache auf der einen Seite und einem elektrisch leitenden Sensordraht auf mindestens einer im wesentlichen potentialfreien Metallflache auf der anderen Seites eines Isolators, vorgesehen, wobei die Senderflache und der Sensordraht an eine Auswerteschaltung angeschlossen sind.

### Aufgabe der Erfindung

Aufgabe der Erfindung ist es, Lösungen anzugeben, durch welche sich hinsichtlich der Erfassung verletzungsrelevanter Situationen, insbesondere der Präsenz von Gliedmaßen in gefährdungsrelevanten Bereichen Vorteile ergeben.
Diese Aufgabe kann durch ein Erfassungssystem gemäß dem unabhängigen Anspruch gelöst werden. Weiterbildungen des Erfassungssystems sind in den Unteransprüchen definiert.

Dadurch wird es auf vorteilhafte Weise möglich, die Präsenz eines Objektes, insbesondere eines Lebewesens in dem Observationsbereich mit hoher Signalschärfe zu erfassen, da das Objekt als Signalübertragungsmedium fungiert dessen Übertragungseigenschaften deutlich von den Übertragungseigenschaften des Observationsbereich im ungestörten Zustand abweichen.

Sowohl das Erfassungsorgan als auch das Emissionsorgan kann als Drahtstruktur ausgeführt sein. Diese Drahtstruktur kann in eine Dichtungseinrichtung integriert sein.

Es ist in vorteilhafter Weise möglich, die Auswertung des Empfangsereignisses derart vorzunehmen, dass hierdurch der Abstand des Objektes relativ zum Empfangsorgan zumindest grob ermittelt werden kann. Nach Maßgabe dieser Auswertung kann eine Systemsteuerung durchgeführt werden, wobei durch diese Systemsteuerung eine Abschaltung, eine Verlangsamung, oder eine Abstimmung der Sicherheitsmaßnahmen, z.B. Erhöhung der Abschaltsensitivität, oder Verringerung des zulässigen Leistungsbezuges eines Antriebsmotors veranlasst werden kann.

Die Auswertung des Empfangsereignisses kann mit der Maßgabe erfolgen hierbei, die Längsposition des Objektes entlang des Empfangsorgans zu bestimmen. Dies wird insbesondere möglich, indem das Empfangsorgan eine ausgeprägte Widerstandszunahme über seine Länge aufweist. Die kann erreicht werden, indem das Empfangsorgan partitioniert ausgebildet ist, wobei die einzelnen Partitionen durch Widerstände gekoppelt sind. Je nachdem welcher Partition das in den Observationsbereich eindringende Objekt am nähesten ist, erfolgt eine hierfür indikative Änderung des Frequenzganges des das Empfangsorgan einschließenden Schaltungsabschnitts.

Das Erfassungsorgan ist in eine Bewegt-Komponente eingebunden, und zwar derart, dass der Observationsbereich mit der Bewegt-Komponente mitwandert. Alternativ hierzu, oder auch in Kombination mit dieser Maßnahme ist es auch möglich das Emissionsorgan in eine Bewegt-Komponente einzubinden, derart, dass der Emissionsbereich mit dem Emissionsorgan des Einkoppelungssystems mitwandert. Stellvorgangsbedingte systematische Änderung der Empfangseigenschaften finden vorzugsweise bei der Auswertung der Signale Berücksichtigung, so dass die rein stellvorgangsbedingt verursachten Änderungen der Signalintensität oder des Phasenganges nicht fehlerhaft als Objektpräsenz ausgewertet werden. Den stellvorgangsbedingten systematischen Änderungen der Übertragungseigenschaften des Erfassungssystems kann ggf. auch durch Beeinflussung der Sendewirkung des Einkoppelungssystems Rechnung getragen werden. So kann in Systemzuständen mit relativ kleinen Abständen zwischen den Empfangs und Emissionsorganen mit geringerer Feldstärke observiert werden, wogegen bei Systemzuständen mit größeren Ausdehnungen des relevanten Observationsbereiches größere Signalstärken realisiert werden.

Es ist möglich, die Beschaltung der Sensororgane und der Empfangsorgane durch eine Multiplexeranordnung zu realisieren, so dass Empfangsereignisse verschiedener Erfassungsorgane, oder Abschnitte der Erfssungsorgane, sowie eine Signalaufschaltung auf die Emissionsorgane abfolgend erfolgt. Bei dieser Variante ist es möglich, die Auswertung durch kombinierte Betrachtung der jeweiligen sukzessiv erhobenen Signalereignisse vorzunehmen. Beispielsweise kann die Beurteilung der Präsenz eines Lebewesens davon abhängig gemacht werden, dass mehrer Abfragen bestimmte Ergebnisse bzw. Signalereignisse bestätigen.

Durch Auswertung des Übertragungsverhaltens kann in vorteilhafter Weise eine Funktionskontrolle abgewickelt werden. Es ist möglich, hier Eigenschaften des in das Emissionsorgan eingekoppelten Signales zu variieren und zu überprüfen, ob diese Variation seitens des Empfangsorganes in einer als korrekt einzustufenden Weise Eingang findet. Diese Variation kann in Form einer Intensitätsvariation und insbesondere in einer Variation des Frequenzmusters liegen.

Unter Betrachtung des Übertragungsverhaltens kann eine Systemabstimmung durchgeführt werden. So ist es möglich, bestimmte, sich lediglich langsam, aber immerhin ändernde äußere Einflüsse zu kompensieren. Hierunter fallen insbesondere Einflüsse wie allgemeine Feuchte, Luftfeuchte und Verschmutzung.

Das erfindungsgemäße Erfassungssystem eignet sich insbesondere für ein Türeinrichtung, insbesondere automatische Schiebetür- oder Drehtüreneinrichtung. Das erfindungsgemäße Erfassungssystem eignet sich besonders auch zur Absicherung des Antriebs von Fahrzeugverdeckeinrichtungen. Das Sende- und oder das Empfangsorgan kann hierbei in einem Schließkantenbereich vorgesehen sein, insbesondere in eine Dichtungseinrichtung integriert sein.

Das Empfangs- und/oder Emissionsorgan kann als resistives Drahtelement ausgebildet sein. Es ist auch möglich das Empfangs- und/oder Emissionsorgan in widerstandsbehaftet gekoppelte Zonen unterteilt auszubilden.

Die erfindungsgemäßen Lösungskonzepte eigen sich dazu, die nachfolgenden nachteiligen Eigenschaften bislang bekannter Sicherungssysteme zu überwinden:
2.1. Notausschalter:
   Eine gefährdete, bzw. bereits eingeklemmte Person kann eine Karusselltür nicht durch betätigen eines entsprechenden Schalters anhalten, sondern ist auf die schnelle Reaktion Dritter angewiesen. Ein weiterer Nachteil dieser Lösung liegt in der Kennzeichnung, bzw. der Verwechselungsgefahr mit dem ebenfalls vorhandenen "Notauf"-Schalter für Fluchtwege.
2.2. Kontaktleisten:
   Eine in Gefährdungsbereichen angebrachte Kontaktleiste enthält eine Reihe von Schaltern, die ab einem gewissen Druck durch Schließen oder Öffnen reagieren. Im Normalfall schwingt der Türflügel einer Karusselltür in wenigen cm Abstand an der Kontaktleiste vorbei. Befindet sich zwischen Tür und Rahmen (Schließkante) ein Objekt (Gegenstand oder eine Person), wird dieses durch die Kraft des Antriebs gegen die leicht flexible Kontaktleiste gedrückt, was eine Betätigung des Schalters zur Folge haben soll, die den Motor der Tür stoppt. Als Hauptnachteil gilt, dass das Objekt eingeklemmt wird, wobei eine erhebliche (1500 N) Kraft auf dieses einwirkt. Dünne Objekte, wie z.B. Hundeleinen, Spazierstöcke oder Kinderfinger werden nicht sicher detektiert. Gelegentlich ist es auch vorgekommen, dass das Objekt in einem ungünstigen Winkel auf die Leiste getroffen ist, und deshalb der Schalter nicht auslöste, damit also die Tür nicht stoppte und das Objekt zwischen Tür und Rahmen eingeklemmt und mitgeschleift wurde.
2.3. Druckschläuche:
   Mit einem Gas oder einer Flüssigkeit gefüllte Schläuche haben an mindestens einem Ende einen druckempfindlichen Sensor. Wie bei 2.2. muss das Objekt erst eingeklemmt werden, um eine Auslösung zu erreichen, damit gelten die selben Nachteile, wie bei 2.2. Zusätzlich kann diese Sicherheitseinrichtung bei Undichtigkeit unbemerkt versagen.
2.4. Lichtschranken:
   Eine Lichtquelle strahlt auf eine ihr gegenüberliegende Fotozelle, die weitermeldet, ob der Lichtstrahl durch ein Objekt unterbrochen wurde. Sie arbeiten nur punktuell und gradlinig und sind anfällig gegen Reflexionen und Verschmutzung. Reflexlichtschranken werden deshalb häufig so eingestellt, dass sie von oben bis ca. 20 cm vor dem Fußboden wirken, damit sie nicht durch Nässe oder glänzende Objekte (Schuhe) irritiert werden. Deshalb wird ein krabbelndes Kleinkind oder eine gestürzte Person oft nicht detektiert und deshalb geschädigt.
2.5. Radar:
   Die Reflexion von Mikrowellen, die auf bewegte Objekte treffen, wird gemessen. Als nachteilig erweist sich der wellenförmige Ausbreitungsfächer und die, zumindest in unmittelbarer Nähe, recht energiereiche Strahlung zusätzlich z den Nachteilen, wie bei 2.4.
2.6. Überstromdetektoren:
   Das Prinzip dieser Lösung liegt darin, dass ein durch ein geklemmtes Objekt gebremster Antrieb viel mehr Strom verbraucht als im freien Lauf. Dieses ist durch einen Komparator feststellbar, der zur Abschaltung des Motors führt. Auch hier gilt der Nachteil, dass erst eine Einklemmung auftreten muss, bevor die Sicherheitseinrichtung aktiv wird.
2.7. Lichtwellenleiter:
   Lichtwellenleiter ähneln den Lichtschranken (2.4.). Sie benötigen eine zusätzliche Beleuchtung und arbeiten fehlerhaft bei Verschmutzung.
2.8. Kamera:
   Ein aufgenommenes Bild wird mit einem Sollzustand verglichen (holistisch). Erreichen die Unterschiede einen bestimmten Wert, führt dies zur Meldung. Dazu ist eine aufwendige Bildverarbeitung und eine zusätzliche Beleuchtung (z.B. bei Nacht) notwendig. Ständiges Manko sind Fremdlichteinflüsse (z.B. Autoscheinwerfer) und Kontrastprobleme (z.B. dunkle Objekte auf dunklem Grund oder Zigarettenglut).
2.9. Kapazitive Näherungsschalter:
   Diese arbeiten zumeist punktuell und haben somit nur einen kleinen Erfassungsbereich, neben einer für viele Fälle ungünstigen Einbauhöhe.

Die aufgeführten, herkömmlichen Sicherheitseinrichtungen können in vielen Fällen keinen ausreichenden Schutz bieten.

Die erfindungsgemäßen Lösungskonzepte ermöglichen es, Erfassungseinrichtung ohne Beeinträchtigung des Erscheinungsbildes des abzusichernden Systems unter apparatetechnisch geringem Aufwand zu realisieren.

Das erfindungsgemäße Konzept eignet sich insbesondere die Realisierung von Näherungsdetektion zum Schutz von Mensch und Tier vor Verletzungen unter Verwendung flexibel verlegbarer Schliesskantendichtungen bei elektronisch gesteuerten Schließvorrichtungen und kraftbetriebenen Türen und Toren

Die Erfindung bietet insbesondere folgende Vorteile:
Zum einen kann hierdurch die Funktion bestehender Sicherheitseinrichtungen ergänzt und verbessert werden. Außerdem ist sie problemlos und unauffällig in bestehende Komponenten beispielsweise eine Tür integrierbar. Dazu wird ein elektrischer Leiter (Draht, Folie, Litze, leitender Gummi/Kunststoff, Gel etc.) in eine Dichtung integriert, wie sie für Schließkanten bereits verwendet wird. Dies hat u.a. den Vorteil, dass diese gegen eine herkömmliche Dichtung auch nachträglich ausgetauscht werden kann. Die Schließkante ist der neuralgische Punkt hinsichtlich Einklemmung. Dieser wird durch das erfindungsgemäße Konzept besonders wirkungsvoll abgesichert.

Eine elektronische Schaltung erzeugt eine kapazitives Wechselfeld an dem elektrischen Leiter, welches das Annähern von leitenden Objekten, wie menschlichen oder tierischen Körperteilen über die gesamten Länge des Leiters/Dichtung/Schließkante feststellen kann.

### Kurze Beschreibung der Zeichnungen

Weitere Einzelheiten und Merkmale der Erfindung ergeben sich aus der nachfolgenden Beschreibung in Verbindung mit der Zeichnung. Es zeigt:
- **Abb.1**: eine Prinzipskizze zur Veranschaulichung einer Variante eines erfindungsgemäßen Erfassungssystems;
- **Abb.2**: eine Prinzipskizze zur Veranschaulichung einer zweiten Variante eines erfindungsgemäßen Erfassungssystems unter Verwendung eines markant resistiven Sensordrahtes, zur Ermittlung der Längsposition eines Näherungsereignisses;
- **Abb.3**: eine Prinzipskizze zur Veranschaulichung einer dritten Variante eines Richtelektrodenanordnung, zur definierten und variierbaren Festlegung der Ausrichtung eines Sensorfeldes, d.h. des zur Erfassung eines Eingangssignales in Frage kommenden Observaionsbereiches;
- **Abb.4**: eine Schaltungsskizze zur Veranschaulichung einer prinzipiell dem Konzept nach Abb.2 entsprechenden Schaltung, wobei hier der resistive Sensordraht in einzelne Abschnitte partitioniert ist, wobei diese Partitionen durch Widerstände gekoppelt sind, deren Widerstand deutlich größer ist als der Widerstand der jeweiligen Drahtpartition;
- **Abb.5**: wiederum eine Schaltungsskizze hier unter Nutzung des Ansatzes nach Abb4. sowie des Ansatzes nach Abb.1.
- **Abb.6**: eine Prinzipskizze zur Veranschaulichung des erfindungsgemäßen Erfassungssystems nach Abb.1 in einem "gestörten" Zustand;
- **Abb.7**: eine Prinzipskizze zur Veranschaulichung einer Anwendungsmöglichkeit des erfindungsgemäßen Konzeptes zur Realisierung einer Drehtürsicherung;
- **Abb.8**: eine Prinzipskizze zur weiteren Veranschaulichung des erfindungsgemäßen Konzeptes bei einer Drehtüre in einem gefährdungsrelevanten Zustand;
- **Abb.9**: nochmals eine Prinzipskizze ähnlich Abb.7 und 8 zur weiteren Veranschaulichung des erfindungsgemäßen Konzeptes bei einer Drehtüre in einem weiteren gefährdungsrelevanten Zustand;
- **Abb.10**: eine Schaltungsanordnung zur Realisierung einer erfindungsgemäßen Schaltung;

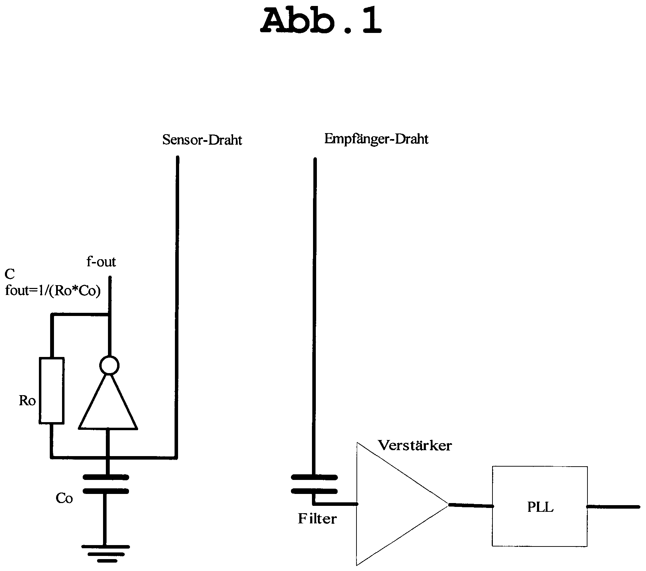

Wie aus Abb.1 ersichtlich ist bei der Einbringung des Sensordrahtes in das flexible Dichtungsmaterial ist die erfindungsgemäße Schaltung unempfindlich gegen Nässe und Verschmutzung. Die Sensorik arbeitet je nach Anforderung automatisch aktiv oder passiv. Damit ist gemeint, dass die Erfindung unterscheidbare Gefährdungsbereiche erkennen kann. Eine Karusselltür ist beispielsweise erst dann gefährlich, wenn sich die Kante eines Flügels der Schließkante des Rahmens soweit nähert, dass eine eintretende Person eingeklemmt werden könnte. Der Gefährdungsbereich wird observiert indem bei einem bestimmten Schließwinkel das Wechselfeld des passiven Sensors, der z.B. in der einen Kante des Flügels untergebracht ist, in einen Empfänger eingespeist wird, der sich in der Dichtung der anderen Kante des Rahmens befindet und dadurch aktiviert wird. Damit ist die Hauptgefahrenquelle (Impulskräfte von bis zu 1500 N) doppelt durch eine Feldschranke abgesichert.

Dieser Vorgang weist zum Einen nach, dass der passive Sensor einwandfrei arbeitet (permanente Selbstprüfung) und zum Anderen, dass sich kein el. leitfähiges Objekt zwischen den Schließkanten befindet. Passiert der Flügel den Rahmen muss dafür gesorgt werden, dass Personen im Inneren der Karusselltür mit der Kante des Flügels nicht in Berührung kommen, etwa wenn sie sich mit der Hand an der Innenwandung abstützen. Ebenso muss die untere zum Boden gerichtete Kante des Flügels mit dem gleichen Sensor beaufschlagt sein, damit diese die Personen nicht anfährt, oder gestürzten Personen über die Finger fährt. Hier wirkt dann ausschließlich der passive Sensorteil der Erfindung, der so eingestellt werden kann, dass der Flügel seine Geschwindigkeit anpassen (abbremsen) bzw. vollständig stoppen kann.

Der Erkennungsbereich des Sensors reicht keulenförmig etwa 20 cm in den Raum. Das erlaubt die Unterscheidung in einen Warnbereich, Bremsbereich und Stoppbereich.

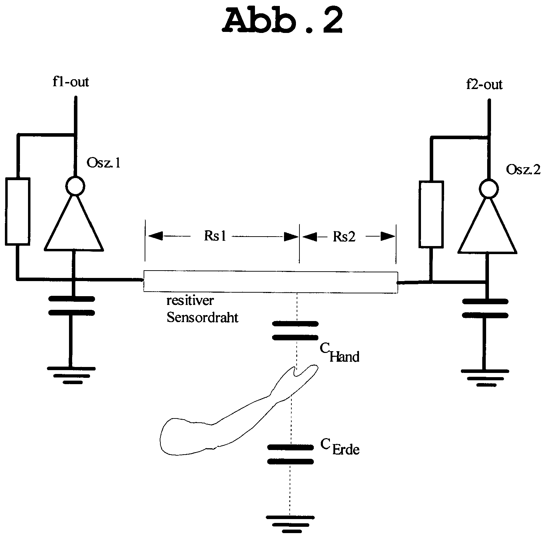

Wie aus Abb. 2 ersichtlich ist es von besonderer Bedeutung für die Risikoanalyse festzustellen, an welchen Punkten der Schließkanten Objekte gefährdet wurden. Deshalb errechnet der Sensor durch seine erfindungsgemäße Anordnung die genaue Position eines in sein Wechselfeld eindringendes Objektes.

Durch seine Kommunikationsfähigkeit lässt sich ein elektronisches Logbuch führen, dessen Auswertung Aufschluss darüber gibt zu welchen Zeiten und an welchen Stellen Gefährdungen stattfanden.
Eine weitere Besonderheit der Erfindung ist eine Lenkbarkeit des Wechselfeldes zur Anpassung an den sich verändernden Schließwinkel und um Fehlauslösungen zu vermeiden.

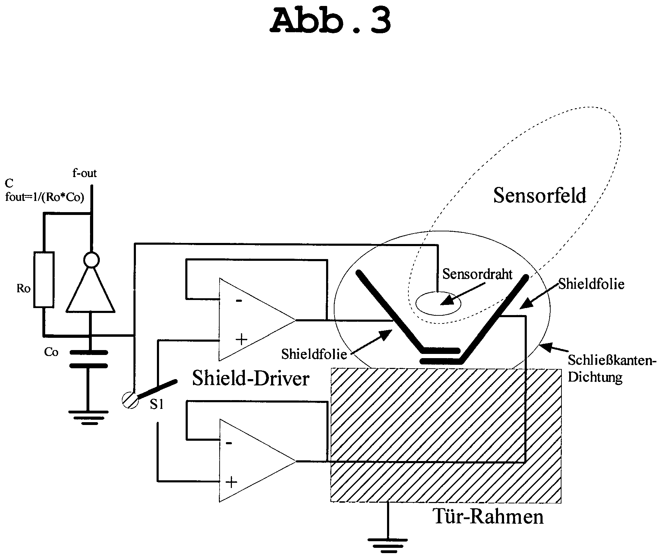

Wie aus Abb. 3 ersichtlich kann das direkte Berühren des Sensors z.B. bevor ein Schließvorgang eingeleitet wird, auf Grundlage des erfindungsgemäßen Konzeptes in besonders vorteilhafter Weise erfasst werden. Schließlich ist die Erfindung geeignet um bestehende Kontaktleisten zusätzlich mit einer berührungslos wirkenden Sicherung zu versehen, indem die Kontaktleiste als Sensordraht verwendet wird.

### Beispielhafte Ausführung:

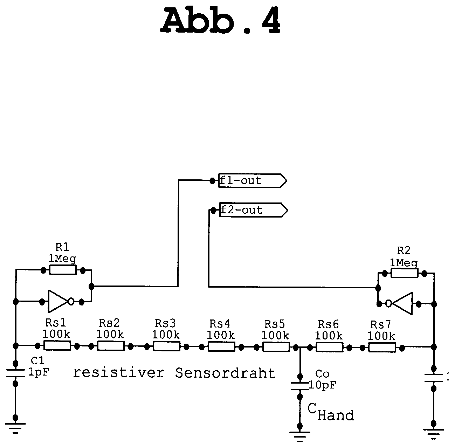

Wie aus Abb. 4 ersichtlich sind zwei RC-Oszillatoren an ihren frequenzbildenden Kondensatoren mit einem Widerstandsdraht verbunden. Dieser ist in einer Schließkantendichtung als Sensorelement untergebracht. Beide Oszillatoren schwingen auf der gleichen Frequenz, wenn keine zusätzliche Kapazität auf den Sensordraht wirkt.

Das Annähern eines el. leitenden Objektes, z.B. einer menschlichen Hand (C_{Hand}), an einen Punkt x (beispielsweise zwischen Rs5 und Rs6) des Sensordrahtes bewirkt, dass sich beide Oszillatoren gegenseitig unterschiedlich modulieren. Dadurch entstehen 2 Frequenzen F1 und F2, deren Grad der Abweichung auf die Position des eingebrachten Objektes schließen lässt. Durch die zusätzlich eingebrachte Kapazitätsänderung sinken die Grundfrequenzen der Oszillatoren ebenfalls ab. Der Grad der Absenkung verändert sich bei zunehmender Annäherung und erreicht seinen höchsten Wert bei direkter Berührung. Kommt in die Nähe des, in der Schließkantendichtung untergebrachten Sensordrahtes, eine über einen weiteren Draht angeschaltete Empfangseinrichtung so nimmt diese die über das Wechselfeld abgegebene Frequenz auf. Ein nachgeschaltetes, selektives Bauteil (Bsp. PLL XR2211, Tondecoder NE567 o.ä.) kann an einem Ausgang darstellen, dass genau diese Frequenz empfangen wurde.

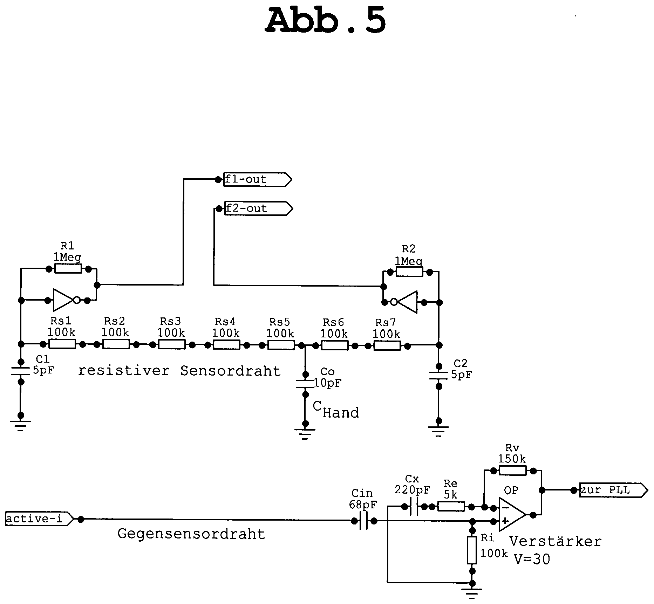

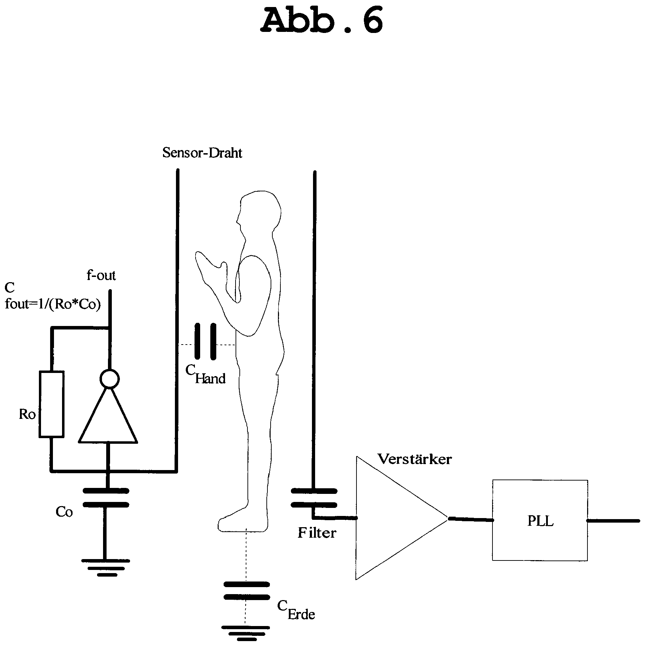

Wie aus den Abb.5 und 6 ersichtlich bedeutet der Nachweis dieses eingespeisten Signals
a) ein Vorgang der zur Gefahr der Einklemmung führt ist entstanden. *Der Drehflügel einer Tür stellt nur zu bestimmten Zeitpunkten eine Gefahr für eintretende Personen dar. Vergleiche Abb x*
b) es befindet sich kein leitendes, und damit frequenzveränderndes Objekt in dem temporären Gefahrenbereich.
Im anderen Fall führt die Anwesenheit einen leitfähigen Objektes zu einer Frequenzveränderung, was das frequenzselektive Bauteil feststellen kann.

### Eine weitere beispielhafte Anwendung

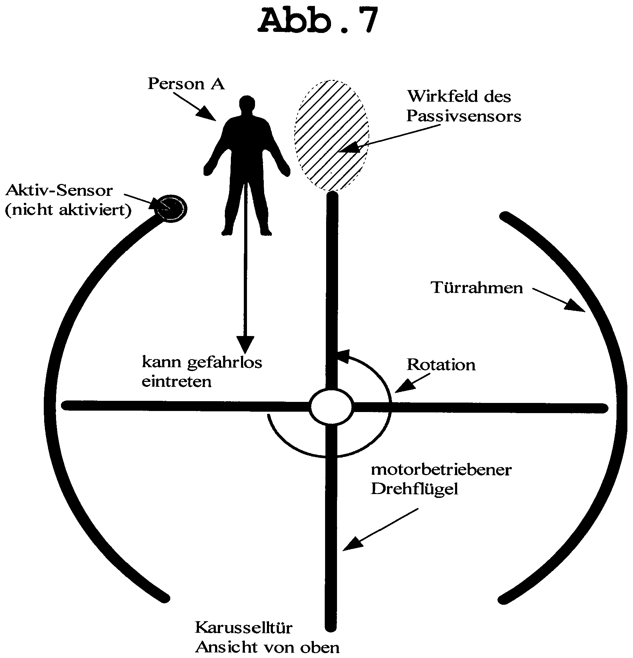

Wie aus Abb. 7 ersichtlich betritt eine Person A eine Karusselltür, die durch die Flügelstellung weit geöffnet ist. Da das Wechselfeld, des der Person befindlichen Flügels den Sensordrahtes des Aktiv-Empfängers im Türrahmen nicht erreichen kann, ist auch keine Gefahrensituation für diesen Moment gegeben.

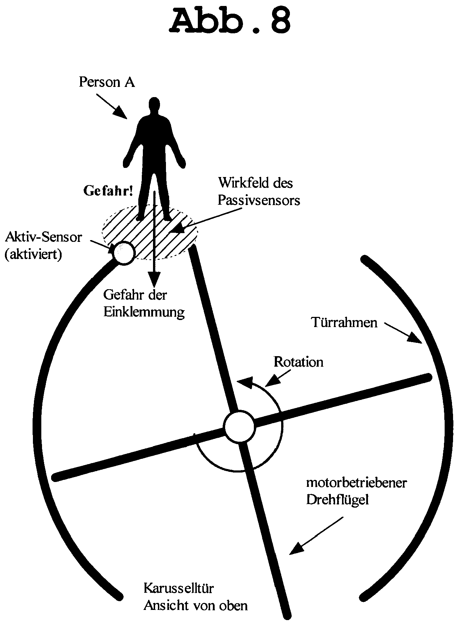

Da sich der Flügel weiter bewegt, kann eine Situation wie in Abb. 8 auftreten.

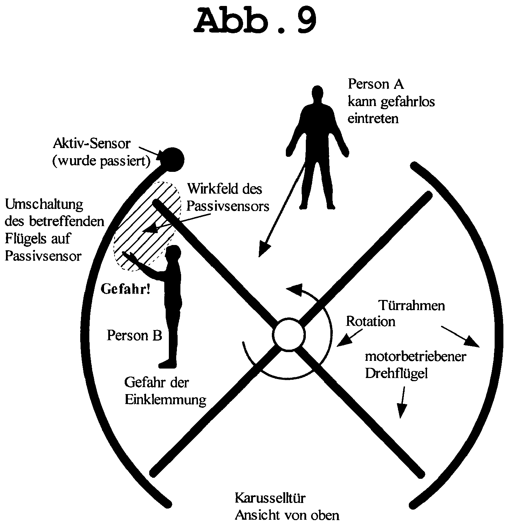

Würde Person A zu diesem Zeitpunkt versuchen noch durch den Spalt zu gelangen, würde der Aktiv-Sensor den Antriebsmotor stoppen, bevor es zu einem Kontakt zwischen Flügel und Person kommt. Passiert der Flügel den Rahmen, kommt sein passiver Sensor zum Einsatz, wie in Abb9 dargestellt.

Gemäß Abb. 9 könnte eine Person B im Durchgang sich durch Abstützen der Hand an der Wandung von einem sich nähernden Drehflügel einklemmen lassen. Auch wäre es möglich, dass sich der Flügel schneller bewegt, als die Person laufen kann. Deshalb ist der Sensordraht des passiven Sensors zusätzlich auch an der Unterkante des Flügels (Fußbereich) angebracht.

Aus der Abbildung ist zu ersehen, dass die Gefährdungsbereiche sich dynamisch verändern können und Person A einen ungefährdeten Eintritt hat, während Person B sich einklemmen könnte.

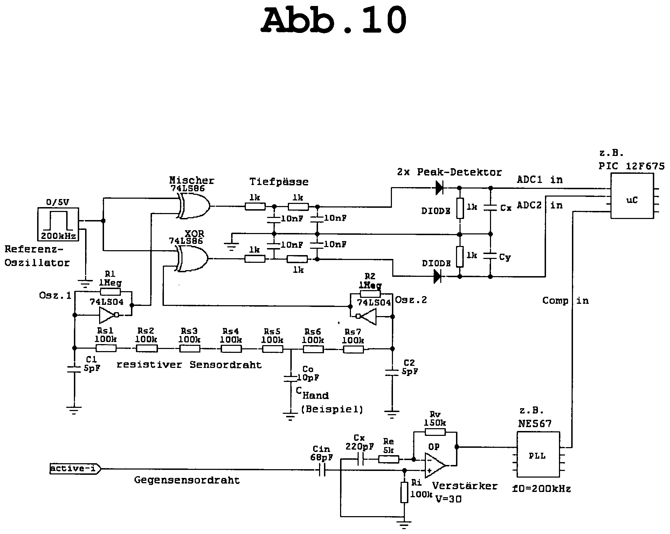

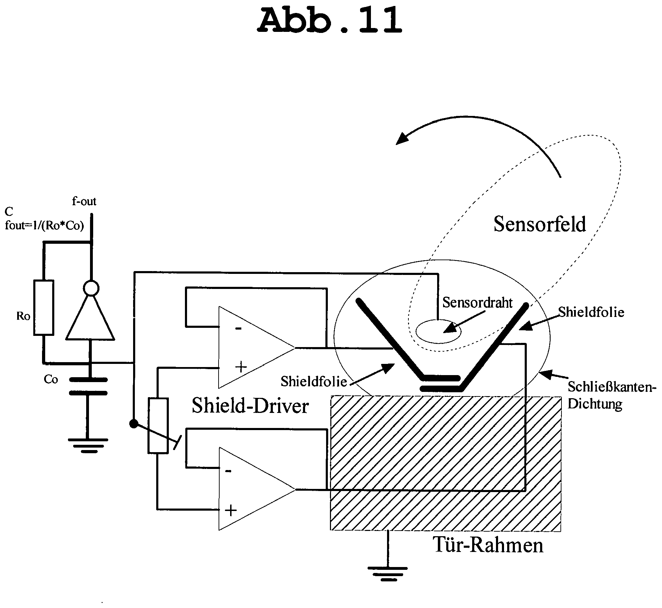

In Abb. 10 ist eine weitere erfindungsgemäße Schaltungsanordnung dargestellt.

### Schaltungsbeschreibung:

zwei Oszillatoren erzeugen zunächst eine gleiche Frequenz. Sie sind über ein längliches
resistives Material verbunden. Bei Annäherung einer zusätzlichen Kapazität (Körperteil)
an dieses Material sinken die Frequenzen ab. Je nachdem, wo sich das eindringende Objekt
lokal befindet, entsteht ein Wechselspannungsteiler, wobei der jeweils dem eindringenden
Körperteil nähere Oszillator eine gegenüber dem andren leicht erhöhte Frequenz erzeugt
(auf Grund des Widerstandsteilerverhälnisses).

### Gründe für Referenzgenerator

Die Frequenzänderungen sind zunächst minimal und müssen deutlich diskriminiert werden.

Die geschieht unter Verwendung eines Referenzoszillators, der eine feste Frequenz
vorweist, die gleich der beiden Oszillatoren (Osz.1, Osz2) ist, wenn diese durch
Fremdkörper ungestört schwingen. Ein nach einer Mischstufe angeschalteter Tiefpass zeigt
ein Sensorereignis als f(1) = |f(referenz)-f(osz.1)| und f(2) = |f(referenz)-f(osz.2)|. Ein
eindringendes Körperteil erhöht f(1)+f(2) in Abhängigkeit der Distanz. Die Position des
Eindringens lässt sich durch f(1)-f(2) bestimmen.

### Alternative Feldsteuerung

durch Veränderung der Shieldbedingungen (Erfassungskeule). Oder durch Nutzung von
(saugenden) Metallstrukturen als Sensorelement. Vorzugsweise Ausrichtung zur
Gefahrenstelle.

### Vorteilhafte Anbringung

Auch Metallelemente (Tür-Fensterrahmen, Pfosten, Maschinenelemente) nutzbar
Weitere Applikationsmöglichkeiten des erfindungsgemäßem Erfassungssystems sind Diebstahlsicherungssysteme zum Beispiel in Kombination mit, oder unter Einbindung in Fahrradständer.
Ergänzung von Schaltleisten
durch Beauschlagung mit der Sensorelektronik
1. Position der Hand/Körperteil feststellbar durch resitives Sensormaterial
2. Detektion eines temporär (u.U. zyklisch) auftretenden Gefährdungsbereiches
3. Lenkbare "Shield- oder Detektionskeule"
4. isolierte Metallteile als Sensorelement verwendbar

### Besonderheiten der Elektronik

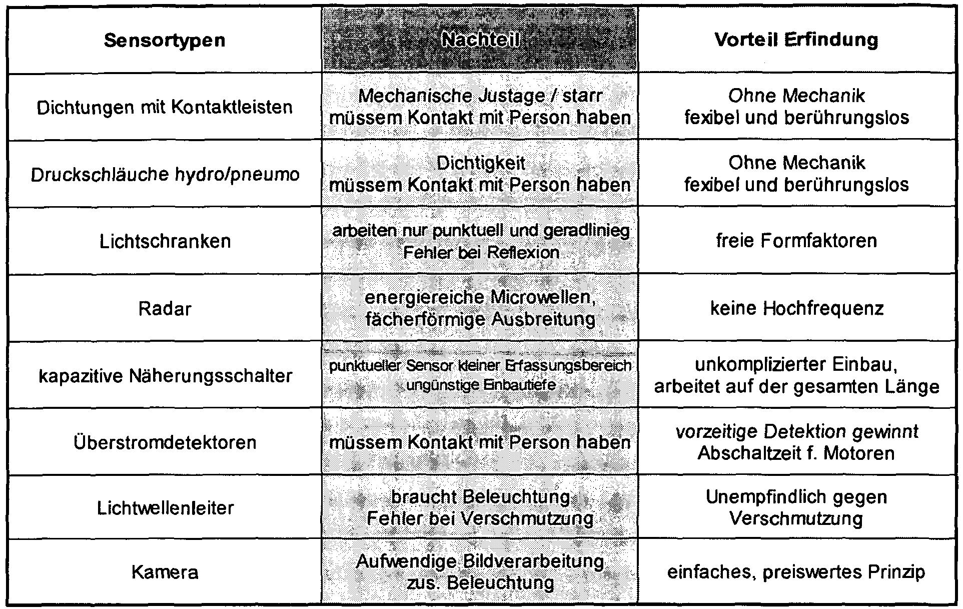

## Patentansprüche

1. Erfassungssystem, insbesondere zur Realisierung eines Schutzsystems für motorgetriebene Komponenten, mit:
- einer motorgetriebenen Komponente,
- einer Einkoppelungseinrichtung die als solche ein Emissionsorgan aufweist, zur Emission eines modulierten elektrischen Feldes, wobei das Emissionsorgan in der motorgetriebenen Komponente angeordnet ist,
- einer starren Komponente,
- einer Empfangseinrichtung zur Erfassung der Präsenz eines Objektes, insbesondere eines Lebewesens, in einem Observationsbereich, wobei die Empfangseinrichtung in der gegenüber der motorgetriebenen Komponente starren Komponente angeordnet ist und der Observationsbereich zwischen der starren Komponente und der motorgetriebenen Komponente liegt,
- wobei die Empfangseinrichtung ein Empfangsorgan umfasst, zur Aufnahme eines unter Wirkung des modulierten elektrischen Feldes verursachten Empfangsereignisses,
- wobei die Empfangseinrichtung und die Einkoppelungseinrichtung derart konfiguriert sind, dass anhand des Übertragungsverhaltens des zumindest abschnittsweise zwischen dem Empfangsorgan und dem Emissionsorgan liegenden Observationsbereiches die Präsenz jenes Objektes, insbesondere Lebewesens in dem Observationsbereich erfasst wird.

2. Erfassungssystem nach Anspruch 1, **dadurch gekennzeichnet, dass** das Empfangsorgan als Drahtstruktur ausgeführt ist.

3. Erfassungssystem nach Anspruch 1, oder 2, **dadurch gekennzeichnet, dass** das Emissionsorgan als Drahtstruktur ausgeführt ist.

4. Erfassungssystem nach wenigstens einem der Ansprüche 1 bis 3, **dadurch gekennzeichnet, dass** die Auswertung des Empfangsereignisses mit der Maßgabe erfolgt, den Abstand des Objektes relativ zum Empfangsorgan zu bestimmen.

5. Erfassungssystem nach wenigstens einem der Anspruche 1 bis 4, **dadurch gekennzeichnet, dass** durch Auswertung des Übertragungsverhaltens eine Funktionskontrolle abgewickeltwird.

6. Erfassungssystem nach wenigstens einem der Ansprüche 1 bis 5, **dadurch gekennzeichnet, dass** unter Betrachtung des Übertragungsverhaltens eine Systemabstimmung durchgeführt wird.

7. Erfassungssystem nach wenigstens einem der Ansprüche 1 bis 6, **dadurch gekennzeichnet, dass** das Empfangssystem in eine Türeinrichtung, insbesondere Drehtüreneinrichtung integriert ist, wobei ein Türrahmen die starre Komponente und eine Türe die motorgetriebene Komponente bildet.

8. Erfassungssystem nach wenigstens einem der Ansprüche 1 bis 7, **dadurch gekennzeichnet, dass** das Empfangssystem in eine Fahrzeugverdeckeinrichtung integriert ist, wobei ein Windschutzrahmen die starre Komponente und ein bewegliches Verdeck die motorgetriebene Komponente bildet.

9. Erfassungssystem nach wenigstens einem der Ansprüche 1 bis 8, **dadurch gekennzeichnet, dass** das Sende- und oder das Empfangsorgan in einem Schließkantenbereich vorgesehen ist, insbesondere in eine Dichtungseinrichtung integriert ist.

10. Erfassungssystem nach einem der vorhergehenden Ansprüche, wobei die Einkoppelungseinrichtung einen ersten Sensordraht (Rs1, Rs2) umfasst dessen erstes Ende mit einem ersten Oszillator (Osz. 1) and dessen zweites Ende mit einem zweiten Oszillator (Osz. 2) verbunden ist.

11. Erfassungssystem nach Anspruch 10, wobei der erste Sensordraht ein Widerstandsdrahtsensor (Rs1, Rs2) ist.

12. Erfassungssystem nach Anspruch 11, wobei frequenzbestimmende Kondensatoren der Oszillatoren (Osz.1, Osz. 2) mit dem Widerstandsdrahtsensor (Rs1, Rs2) verbunden sind.

13. Erfassungssystem nach Anspruch 10, 11 oder 12, wobei die Empfangseinrichtung einen zweiten Sensordraht umfasst welcher mit einem Verstärker verbunden ist.

14. Erfassungssystem nach Anspruch 13, wobei der Ausgang des Verstärkers mit einer PLL Schaltung verbunden ist.

15. Erfassungssystem nach einem der vorhergehenden Ansprüche 10-14, wobei der erste Oszillator (Osz. 1) mit einem Mischer gekoppelt ist welchem eine Referenzfrequenz zugeführt wird und der zweite Oszillator (Osz. 2) einem XOR Gatter verbunden ist welchem die Referenzfrequenz zugeführt wird und wobei Ausgänge des Mischers und des XOR Gatters mit einem Mikrokontroller verbunden sind.

## Claims

1. Detection system, in particular for the realization of a protection system for motor-driven components, comprising:
- a motor-driven component,
- a coupling device, which as such has an emitting element for emitting a modulated electric field, the emitting element being arranged in the motor-driven component,
- a rigid component,
- a receiving device for detecting the presence of an object, in particular a living being, in an observation area, wherein the receiving device is arranged in the component which is rigid relative to the motor-driven component and the observation area lies between the rigid component and the motor-driven component,
- wherein the receiving device comprises a receiving element for receiving a receiving event caused under the effect of the modulated electric field,
- wherein the receiving device and the coupling device are configured such that based on the transmission behavior of the observation area at least partially lying between the receiving element and the emitting element the presence of that object, in particular of a living being, is detected in the observation area.

2. The detection system according to claim 1, **characterized in that** the receiving element is designed as a wire structure.

3. The detection system according to claim 1 or 2, **characterized in that** the emitting element is implemented as a wire element.

4. The detection system according to at least one of claims 1 to 3, **characterized in that** the evaluation of the receiving event is carried out with the condition to determine the distance of the object relative to the receiving element.

5. The detection system according to at least one of claims 1 to 4, **characterized in that** a function control is performed by evaluating the transmission behavior.

6. The detection system according to at least one of claims 1 to 5, **characterized in that**, under consideration of the transmission behavior, a system tuning is performed.

7. The detection system according to at least one of claims 1 to 6, **characterized in that** the receiving system is integrated in a door device, in particular a revolving door device, wherein a door frame forms the rigid component and a door forms the motor-driven component.

8. The detection system according to at least one of claims 1 to 7, **characterized in that** the receiving system is integrated in a vehicle convertible top device, wherein a windbreak frame forms the rigid component and a movable top forms the motor-driven component.

9. The detection system according to at least one of claims 1 to 8, **characterized in that** the transmitting and or the receiving element is provided in a closing edge region, in particular is integrated in a sealing device.

10. The detection system according to claim 1, wherein the coupling device comprises a first sensor wire (Rs1, Rs2) whose first end is connected to a first oscillator (Osz. 1) and whose second end is connected to a second oscillator (Osz. 2).

11. The detection system according to claim 10, wherein the first sensor wire is a resistance wire sensor (Rs1, Rs2).

12. The detection system according to claim 11, wherein frequency-determining capacitors of the oscillators (Osz. 1, Osz. 2) are connected to the resistance wire sensor (Rs1, Rs2).

13. The detection system according to claim 10, 11 or 12, wherein the receiving means comprises a second sensor wire which is connected to an amplifier.

14. The detection system according to claim 13, wherein the output of the amplifier is connected to a PLL circuit.

15. The detection system according to one of the preceding claims 10-14, wherein the first oscillator (Osz. 1) is coupled to a mixer to which a reference frequency is applied and the second oscillator (Osz. 2) is connected to an XOR gate to which the reference frequency is applied and wherein outputs of the mixer and the XOR gate are connected to a microcontroller.

## Revendications

1. Système de détection, en particulier pour la réalisation d'un système de protection pour des composants motorisés, comportant :
- un composant motorisé,
- un dispositif de couplage, qui en tant que tel présente un organe d'émission, pour l'émission d'un champ électrique modulé, l'organe d'émission étant disposé dans le composant motorisé,
- un composant rigide,
- un dispositif de réception, pour détecter la présence d'un objet, en particulier d'un être vivant, dans une zone d'observation, le dispositif de réception étant disposé dans le composant rigide vis-à-vis du composant motorisé, et la zone d'observation se trouvant entre le composant rigide et le composant motorisé,
- le dispositif de réception comprenant un organe de réception, destiné à capter un événement de réception provoqué par l'action du champ électrique modulé,
- le dispositif de réception et le dispositif d'injection étant configurés de telle sorte que, par l'intermédiaire de la caractéristique de transmission de la zone d'observation, au moins par segments situés entre l'organe de réception et l'organe d'émission, la présence d'un objet soit détectée, en particulier d'un être vivant dans la zone d'observation.

2. Système de détection selon la revendication 1, **caractérisé en ce que** l'organe de réception est réalisé sous forme d'une structure de fil.

3. Système de détection selon la revendication 1 ou 2, **caractérisé en ce que** l'organe d'émission est réalisé sous forme d'une structure de fil.

4. Système de détection selon au moins l'une des revendications 1 à 3, **caractérisé en ce que** l'évaluation de l'évènement de réception a lieu à condition de déterminer la distance entre l'objet et l'organe de réception.

5. Système de détection selon au moins l'une des revendications 1 à 4, **caractérisé en ce qu'**un contrôle de fonctionnement se déroule sous l'effet de l'évaluation de la caractéristique de transmission.

6. Système de détection selon au moins l'une des revendications 1 à 5, **caractérisé en ce qu'**un accord du système est mis en oeuvre par prise en considération de la caractéristique de transmission.

7. Système de détection selon au moins l'une des revendications 1 à 6, **caractérisé en ce que** le système de réception est intégré dans un dispositif de porte, en particulier un dispositif de porte à tambour, un encadrement de porte formant le composant rigide et une porte formant le composant motorisé.

8. Système de détection selon au moins l'une des revendications 1 à 7, **caractérisé en ce que** le système de réception est intégré dans un dispositif de capote de véhicule à moteur, un cadre de pare-brise formant le composant rigide, et une capote mobile formant le composant motorisé.

9. Système de détection selon au moins l'une des revendications 1 à 8, **caractérisé en ce que** l'organe d'émission et/ou de réception est prévu dans une zone d'arête de fermeture, en particulier est intégré dans un dispositif d'étanchéité.

10. Système de détection selon l'une des revendications précédentes, dans lequel le dispositif d'injection comprend un premier fil capteur (Rs1, Rs2), dont la première extrémité est reliée à un premier oscillateur (Osz. 1) et dont la seconde extrémité est reliée à un second oscillateur (Osz. 2).

11. Système de détection selon la revendication 10, dans lequel le premier fil capteur est un fil capteur résistif (Rs1, Rs2).

12. Système de détection selon la revendication 11, dans lequel des condensateurs, déterminant la fréquence, des oscillateurs (Osz1, Osz.2) sont reliés au capteur à fil résistif (Rs1, Rs2).

13. Système de détection selon la revendication 10, 11 ou 12, dans lequel le dispositif de réception comprend un second fil capteur, qui est relié à un amplificateur.

14. Système de détection selon la revendication 13, dans lequel la sortie de l'amplificateur est reliée à un circuit PLL.

15. Système de détection selon l'une des revendications précédentes 10 à 14, dans lequel le premier oscillateur (Osz. 1) est couplé à un mélangeur, vers lequel est envoyée une fréquence de référence, et le second oscillateur (Osz. 2) est relié à une porte XOR, vers laquelle est envoyée la fréquence de référence, les sorties du mélangeur et de la porte XOR étant reliées à un microcontrôleur.
